# EUROPEAN PATENT APPLICATION

(11) **EP 0 829 772 A2**
(43) Date of publication of application: **18.03.1998**
(21) Application number: 97306704.4
(22) Date of filing: 01.09.1997
(51) Int. Cl.: G03G 15/00, G02B 26/12, B41J 2/435, H04N 1/113

(54) **Noise reduction device for a laser scanning unit**

(30) Priority: 12.09.1996 KR 9639561
(71) Applicant: Samsung Electronics Co., Ltd., Suwon City, Kyungki-do (KR)
(72) Inventor: Park, Dong-Hoon, Yongin-city, Kyungki-do (KR)
(74) Representative: Tunstall, Christopher Stephen

(57) **Abstract**

A laser scanning unit for an electro-photographic printing apparatus is described. The laser scanning unit includes a laser source 20, a scanning motor 10 mounted on a PCB 14 of a motor driver and a polygonal rotating mirror 12 driven by the scanning motor 10 and adapted to reflect a laser beam from the laser source 20 onto a photoconductive drum 28. A transparent cover 16 is mounted on and sealed to the PCB 14 and encloses the scanning motor 10 and the polygonal rotating mirror 12. The space defined by the cover 16 may be evacuated or filled with helium to reduce noise.

## Description

### Background of the Invention

The present invention relates to a laser scanning unit for an electro-photographic printing apparatus. A laser scanning unit is used in an electro-photographic printing apparatus, such as a laser beam printer, to create a latent electrostatic image on the photoconductive drum by scanning it with a laser beam.

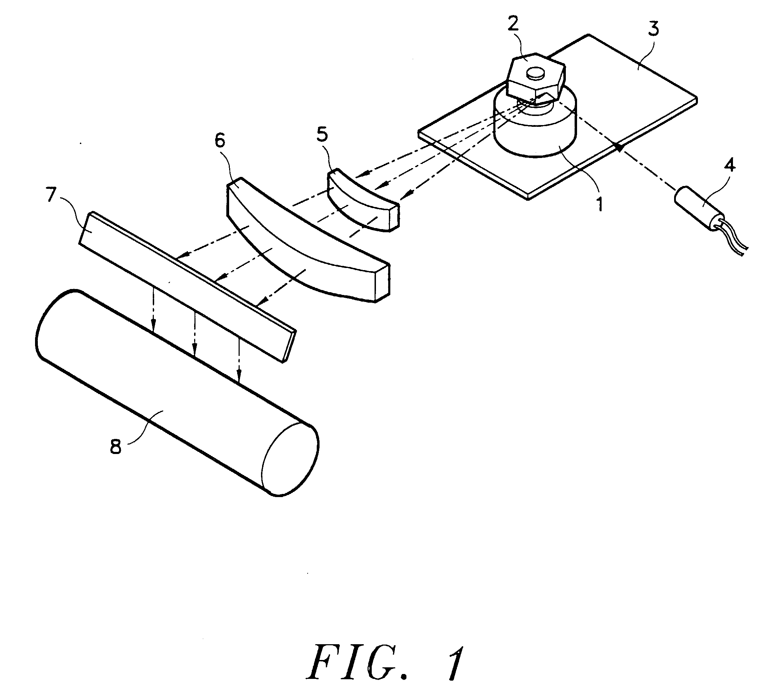

The construction of the laser scanning unit of an electro-photographic printing apparatus will now be described with reference to FIG. 1. The laser scanning unit includes a laser diode 4 to create a laser beam, a polygonal rotating mirror 2 to reflect the laser beam from laser diode 4 and a scanning motor 1 which is driven by a constant-speed controller to spin the polygonal mirror 2. The scanning motor 1 is installed on a printed circuit board 3 of the motor driver 1.

The laser scanning unit also includes a reflecting mirror 7, a toric lens 6 and a spherical lens 5 between the photoconductive drum 8 and the polygonal rotating mirror 2 to direct the laser beam so that it creates a latent electrostatic image on the outer surface of photoconductive drum 8. The laser beam from the laser diode 4 is reflected by the polygonal rotating mirror 2, then reflected by the reflecting mirror 7 through the spherical lens 5 and toric lens 6, thus scanning across the outer surface of photoconductive drum 8. The polygonal rotating mirror 2 has six flat sides. A toner image, produced from the latent image, is transferred onto paper through a series of printing procedures.

The scanning motor 1 rotates at speeds between 10,000 and 20,000 RPM, and thus the polygonal rotating mirror 2, which is attached to the scanning motor shaft, also turns at high speed. The laser beam that is reflected by the polygonal rotating mirror 2 is focused by passing through spherical lens 5 and toric lens 6 and produces a latent electrostatic image on the photoconductive drum 8 after being reflected by reflecting mirror 7.

For a laser beam printer which is capable of printing eight sheets of paper a minute, the polygonal rotating mirror 2 must rotate at 12,000 RPM. Each of six flat surfaces of the polygonal rotating mirror 2 continually cuts through the air during rotation, creating high frequency noise. In the laser scanning unit, the components are arranged on a single frame and a lid covers the top of the laser scanning unit to prevent dirt and dust from getting into the unit and to reduce the noise.

In the laser scanning unit of a laser beam printer that can print eight sheets of paper a minute, the noise produced by rotating polygonal mirror 2 cleaving the air when the lid is not covering it is a relatively large 65 dBA. Since the laser beam printer is usually located on a desk in a quiet office such a noise may upset the indoor working environment.

The maximum noise created by the high speed rotation of the laser scanning unit should not exceed 40dBA. To prevent this problem, soundproofing sponges are attached into the laser scanning unit body frame and its lid, and a metallic plate covers its outside so as to dampen the noise made by the polygonal rotating mirror. This construction does not completely eliminate the noise of the laser scanning unit and the soundproofing sponges and the metallic plate increase the size of the laser scanning unit, increasing the size of the printer. Therefore, the use of a conventional noise reduction device is an obstacle to greater compactness of the printer.

### Summary of the Invention

Therefore, it is an objective of the present invention to provide a laser scanning unit of reduced noise output.

Accordingly, the present invention provides a laser scanning unit for an electro-photographic printing apparatus comprising a laser source, a scanning motor mounted on a support, a polygonal rotating mirror driven by the scanning motor and adapted to reflect a laser beam from the laser source onto a photoconductive drum and a transparent cover mounted on the said support and which encloses the scanning motor and the polygonal rotating mirror.

Preferably, the laser source is a laser diode. The laser scanning unit may further comprise a focusing lens onto which the laser beam is reflected by the polygonal rotating mirror and adapted to focus the laser beam onto the photoconductive drum. The focusing lens may be a toric lens and a spherical lens may be positioned between the polygonal rotating mirror and the toric lens.

The laser scanning unit may further comprise a second mirror for directing the laser beam onto a prescribed position on the outer surface of the photoconductive drum.

Preferably, the said support is a PCB and the transparent cover is sealed to the PCB. The space defined by the transparent cover may be evacuated or may be filled with a gas of lower density than the surrounding atmosphere. Helium is suitable.

The cover may be is made of transparent plastic or glass and may be cylindrical in shape.

### Brief Description of the Drawings

The present invention will now be described by way of example with reference to the accompanying drawings in which:
FIG. 1 depicts a laser scanning unit of a conventional laser printing apparatus;

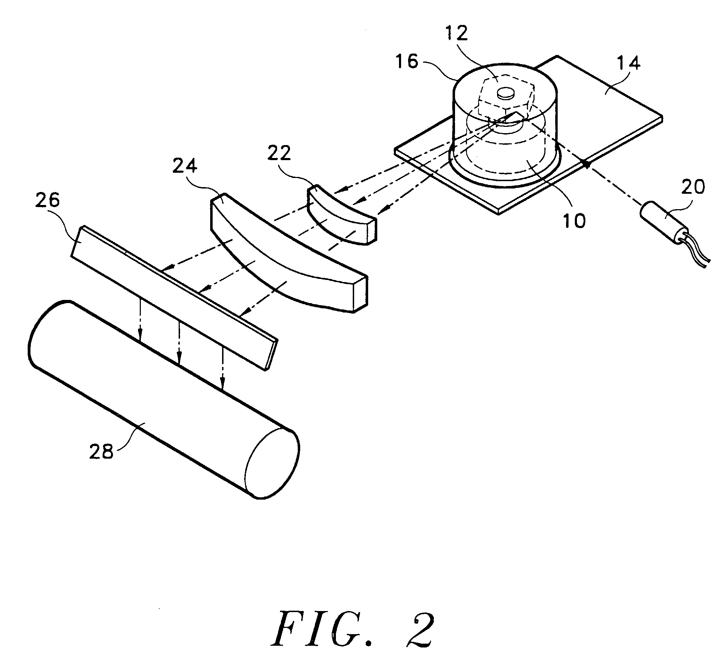

FIG. 2 depicts a laser scanning unit of a laser printing apparatus in accordance with the present invention; and

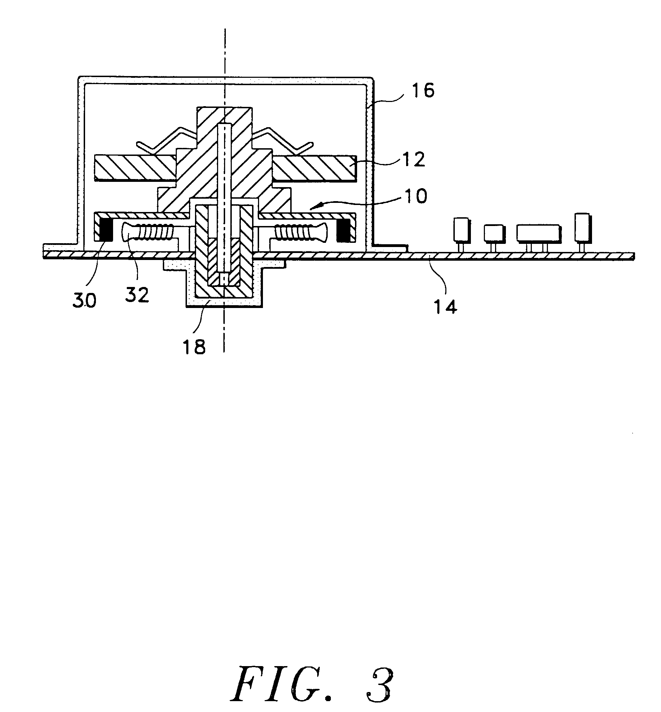

FIG. 3 is a cross-sectional view showing the principal elements of the present invention.

### Detailed Description of Preferred Embodiments

The laser printing apparatus of the present invention includes a laser diode 20, which emits a laser beam, a polygonal rotating mirror 12, which reflects the laser beam onto a focusing lens and a scanning motor 10, which spins the polygonal rotating mirror 12 at high speed. The focusing lens is a toric lens 24 that focuses the laser beam reflected by the polygonal rotating mirror 12 onto a photoconductive drum 28. A spherical lens 22 is spaced away from the toric lens 24 and a reflecting mirror 26 reflects the laser beam that has passed through the toric lens 24 so that it falls upon a prescribed position on the surface of the photoconductive drum 28.

Transparent covers 16 and 18 are installed on the printed circuit board 14 of a motor driver to seal the scanning motor 10 and polygonal rotating mirror 12 so as to contain noise that is created during operation of the scanning motor 10 and the high-speed rotation of polygonal mirror 12.

The noise that occurs during the rotation of polygonal mirror 12 and scanning motor 10 can be contained by placing the scanning unit sealed by upper cover 16 under a vacuum or filling with a low density gas. Helium gas may be used as the gas. The upper cover 16 is made of transparent plastic or transparent glass having high transmittance. Upper cover 16 has a cylindrical shape so that a space is formed inside of upper cover 16.

In such an laser printing apparatus, the stator 32 of the laser scanning unit scanning motor 10 is attached to the printed circuit board 114 of the motor driver and the polygonal rotating mirror 12 is attached to the rotor 30 of scanning motor 10. Upper cover 16 which is made from transparent material attaches to the top surface of the motor driver printed circuit board 14 to seal polygonal rotating mirror 12 and scanning motor rotor 30. Lower cover 18 seals the scanning motor bearing. Upper cover 16 is bonded to or otherwise attached to the motor driver printed circuit board 14 to form a seal.

Scanning motor 10 and polygonal rotating mirror 12 are surrounded by covers 16 and 18 to prevent air infiltration, and upper and lower covers 16 and 18 are bonded to printed circuit board 14 by an adhesive.

The noise that may be produced by high speed rotation of scanning motor 10 in contact with air can be prevented by placing the space sealed by upper cover 16 under a vacuum or filling it with helium. Removing all the air from the interior of the upper cover 16 prevents noise, generated as polygonal rotating mirror 12 cleaves the air, and noise from the operation of scanning motor 10.

Since scanning motor 10 and polygonal rotating mirror 12 operate in a vacuum, noise is minimal during operation. The present invention can also reduce the time taken to stabilizing the laser scanning unit initially because there is no friction with the air.

As described above, the present invention allows the laser scanning unit of a high speed printing apparatus to operate without high frequency noise, assuring noiseless printing operation.

## Claims

1. A laser scanning unit for an electro-photographic printing apparatus comprising:
a laser source;
a scanning motor mounted on a support;
a polygonal rotating mirror driven by the scanning motor and adapted to reflect a laser beam from the laser source onto a photoconductive drum; and
a transparent cover mounted on the said support and which encloses the scanning motor and the polygonal rotating mirror.

2. A laser scanning unit according to claim 1 in which the laser source is a laser diode.

3. A laser scanning unit according to claim 1 or claim 2 further comprising a focusing lens onto which the laser beam is reflected by the polygonal rotating mirror and adapted to focus the laser beam onto the photoconductive drum.

4. A laser scanning unit according to claim 3 in which the focusing lens is a toric lens and further comprising a spherical lens positioned between the polygonal rotating mirror and the toric lens.

5. A laser scanning unit according to claim 3 or claim 4 further comprising a second mirror for directing the laser beam onto a prescribed position on the outer surface of the photoconductive drum.

6. A laser scanning unit according to any preceding claim in which the said support is a PCB and the transparent cover is sealed to the PCB.

7. A laser scanning unit according to claim 6 in which the space defined by the transparent cover is evacuated.

8. A laser scanning unit according to claim 6 in which the space defined by the transparent cover is filled with a gas of lower density than the surrounding atmosphere.

9. A laser scanning unit according to claim 8 in which the lower density gas is helium.

10. A laser scanning unit according to any preceding claim in which the cover is made of transparent plastic or glass.

11. A laser scanning unit according to any preceding claim in which the transparent cover is cylindrical in shape.

12. A laser scanning unit for an electro-photographic printing apparatus as described herein with reference to and as illustrated in FIGs. 2 and 3 of the accompanying drawings.
